(19) **Europäisches Patentamt / European Patent Office / Office européen des brevets**

(11) **EP 2 905 125 B1**

(12) # EUROPEAN PATENT SPECIFICATION

(45) Date of publication and mention
of the grant of the patent:
**30.08.2017 Bulletin 2017/35**

(21) Application number: **14154445.2**

(22) Date of filing: **10.02.2014**

(51) Int Cl.:
*B23K 26/36* (2014.01)    *B60C 13/00* (2006.01)
*B23K 26/00* (2014.01)    *B29C 33/42* (2006.01)
*B29C 59/16* (2006.01)    *B23K 26/067* (2006.01)
*B29C 35/08* (2006.01)    *B29L 30/00* (2006.01)
*B41M 5/24* (2006.01)    *G09F 3/00* (2006.01)
*B23K 101/00* (2006.01)    *B23K 103/00* (2006.01)
*B23K 26/361* (2014.01)    *B23K 26/0622* (2014.01)
*B29D 30/72* (2006.01)

(54) **Digital coding of rubber articles**

Digitale Codierung von Gummiartikeln

Codage numérique d'articles en caoutchouc

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.08.2015 Bulletin 2015/33**

(73) Proprietor: **4JET Technologies GmbH
52477 Alsdorf (DE)**

(72) Inventor: **Kraus, Armin, Dr.
52134 Herzogenrath (DE)**

(74) Representative: **Dilg, Haeusler, Schindelmann
Patentanwaltsgesellschaft mbH
Leonrodstrasse 58
80636 München (DE)**

(56) References cited:
**EP-A1- 0 770 448**    **EP-A2- 0 689 948**
**EP-A2- 1 437 672**    **WO-A1-2005/000714**
**WO-A1-2013/095479**    **WO-A2-2011/107602**
**DE-A1- 10 128 609**    **JP-A- 2000 084 681**
**JP-A- 2004 345 310**    **US-A- 6 149 060**
**US-A1- 2004 155 017**    **US-A1- 2013 082 037**
**US-B1- 6 169 266**

**Description**

FIELD OF INVENTION

The present invention relates to the field of marking of rubber articles.

BACKGROUND

EP 1 063 071 A2 discloses a polymer article in particular a tire with a visible surface wherein either a part of the surface is corrugated in such a way that the distance from corrugation ridge to corrugation ridge is between 4 μm and 40 μm or at least a part of the surface is nubbed in such a way that the distance from nub tip to nub tip is between 5 μm and 60 μm.

US 2009/0218019 A1 discloses an article having at least one visible surface, this surface comprising on at least part of it a pattern contrasting with the surface of the article, this pattern comprising a plurality of tuft distributed over the entire said pattern, each tuft having an average cross section between 0.003 and 0.06 mm². Also disclosed is a moulding process for forming a high-contrast pattern on a surface of an article that can be moulded in a mould, this process consisting in producing, at the position of the pattern on the surface of the mould, a plurality of cavities of average cross section between 0.003 and 0.06 mm². The pattern gives the article on which it is produced a velvet feel.

From the web site "http://qr.biz/articles/the michelin concept qr code tire meets the interest s of farmers/" it is known to provide a tire with a QR code by means of velvet technology.

US 2012/0227879 A1 discloses a tire having a visible surface comprising patterns contrasting with said surface, said pattern comprising, over the entire surface thereof, a plurality of tufts distributed with a density of at least five tufts per mm² or a plurality of blades which are substantially parallel to one another and arranged with a pitch of less than 0.5 mm, each tuft having a mean cross section having a diameter of between 0.03 mm and 0.5 mm or each blade having a mean width of between 0.03 mm and 0.5 mm, characterized in that the walls of the tufts or of the blades have, over at least one quarter of the area thereof, a mean roughness Rz of between 5 μm and 30 μm. The effect of these tufts or blades is to trap the incident light on the surface of the pattern and, by light absorption, to give a black matt appearance to the pattern intended to be produced. Further disclosed is a method of producing molds intended to form the visible imprint of the tires comprising such patterns during vulcanisation.

WO 2005/000714 A1 relates to marking of vehicle tires to satisfy governmental requirements and to provide additional inventory and historical data pertaining to each individual tire. A barcode strip location, which can vary on each tire, is read by a camera. This information is supplied to control unit for subsequent use in positioning a laser engraver. A laser applicator or engraver is adjustably mounted at a station by an adjustment mechanism which enables it to be moved in the X, Y and Z planes so that the laser beam can be properly positioned in the X and Y direction for engraving the additional required data on the tire. An encoded symbol such as a self clocking glyph code, data matrix or other types of encoded symbology, referred to as a 2D symbol, can be used for subsequent engraving on sidewall, either adjacent to the DOT engraved data, or at any desired location on the sidewall area. The 2D symbol can include additional information to that contained on the bar code, including an individual serial number for the tire which will remain on the tire throughout its life.

EP 1 437 672 A2 discloses that in a tire manufacturing process, a barcode label which enables identification of each tire being adhered to a side portion of the tire. Further disclosed is a tire marking system for marking tire identification information onto tires based on a tire information in each of barcode labels adhered to the tires. The marking showing the tire identification information may be at least one selected from the following: characters such as an alphanumeric characters; figures such as a triangle and a star; and symbols such as an arrow and a hyphen.

JP 2004 345310 A discloses a molding process in which a processed marking area is firstly detected by a detection means in a tire finishing process and the marking position of an identification sign is calculated and determined from the marking area. Next, a barcode is read out from a barcode label stuck on a tire by the barcode readers of tire marking apparatuses connected on line to a main data processing device. Then, according to the read out barcode information, the information necessary for marking is received from the database of the main data processing device. Finally, based on the information necessary for marking, the identification sign is marked on the predetermined positions of the tire front and back sides by a pair of upper and lower laser marking apparatuses, respectively.

JP 2000 084681 A discloses a tire marking device equipped with a barcode reader which reads a barcode label attached to a tire. On the basis of a tire positional data outputted from a retrieval device, a tire is positioned by the tire positioning device, then, the marking data retrieval device retrieves data to be marked on the tire and outputs to a laser beam irradiation device. The irradiation device marks the tire by scanning a laser beam in accordance with the marking data.

US 6 149 060 A relates to a method and apparatus for tracking the inventory and history of specific individual rubber products. A method for identifying and tracking a rubber product comprises the steps of placing an insert/inserts into a mold in which a rubber product is to be cured, the insert having blades thereon having specific spacing and frequency unique for the rubber product; (B) filling the mold with uncured rubber; (C) curing the rubber and fixing the spacing and frequency of sipes corresponding to the blades and the surface of the rubber product; and (D) using a zero contrast reading device to read the spacing and frequency of the sipes in converting the data contained into a binary code specific for the rubber product.

EP 0 689 948 A2 discloses a tire which comprises in its side wall stripe a recess which is lined with a stripe and into which a stripe of rubber material of a different color is flushedly inlaid. On the rubber stripe a cover stripe is positioned which is of the same color as the sidewall stripe and flushes with the outer contour of the sidewall stripe. After assembly the tire is vulcanized in a conventional manner. Engraving of characters takes place at an arbitrary later point in time. By a laser engraving the portion of the cover stripe is removed such that the sidewall of the thus generated character corresponds to the color of the sidewall and the base of the character 24 corresponds to the color of the colored rubber stripe.

US 6 169 266 B1 discloses another system and method for incorporating graphic and text elements on a surface of an article wherein an etching device removes material from the surface in order to expose layers having different colors.

SUMMARY

In view of the above-described situation, there exists a need for an improved technique that enables to provide a rubber article with improved characteristics while substantially avoiding or at least reducing one or more of the problems of known technologies.

This need is met by the subject matter according to the independent claims 1,11,12, 3 and 14. Advantageous embodiments of the herein disclosed subject matter are described by the dependent claims.

According to a first aspect of the herein disclosed subject matter there is provided a method of providing a rubber article with a digital code pattern, wherein the rubber article comprises a cured polymer material, the method comprising: generating a digital code pattern in the cured polymer material of the rubber article, the digital code pattern comprising a first surface portion and a second surface portion having different optical reflectivity.

This aspect is based on the idea that the characteristics of a rubber article can be improved by using a digital code pattern for marking and by generating the code pattern after curing of the polymer material of the rubber article. Accordingly, providing the digital code pattern can be decoupled from manufacturing (curing) of the rubber article, in particular regarding location and time.

According to embodiments of the first aspect, the method is adapted for providing the functionality as described by one or more of the herein mentioned aspects or embodiments and/or for providing the functionality as required or as resulting by one or more of the herein mentioned aspects or embodiments.

According to a second aspect of the herein disclosed subject matter there is provided a rubber article comprising a cured polymer material forming a surface of the rubber article, the surface comprising: a first surface portion having a first optical reflectivity; a second surface portion having a second optical reflectivity which is lower than the first optical reflectivity; the first surface portion and the second surface portion forming at least a part of a digital code pattern, wherein the digital code pattern identifies the rubber article, in particular within a fabrication batch of rubber articles.

According to embodiments of the second aspect, the rubber article is adapted for providing the functionality as described by one or more of the herein mentioned aspects or embodiments and/or for providing the functionality as required or as resulting by one or more of the herein mentioned aspects or embodiments, in particular of the embodiments of the first aspect.

According to a third aspect of the herein disclosed subject matter there is provided a rubber article marking device comprising: a radiation source for providing electromagnetic radiation; and a controller for controlling the radiation source so as to perform the method according to the first aspect or an embodiment thereof.

According to embodiments of the third aspect, the rubber article marking device is adapted for providing the functionality as described by one or more of the herein mentioned aspects or embodiments and/or for providing the functionality as required or as resulting by one or more of the herein mentioned aspects or embodiments, in particular of the embodiments of the first aspect.

According to a fourth aspect of the herein disclosed subject matter there is provided a computer program product, in particular in the form of a computer program or in the form of a computer readable medium comprising the computer program, for controlling the operation of a rubber article marking device, the computer program being configured for, when being executed on a data processor device, controlling the method according to the first aspect or an embodiment thereof.

According to embodiments of the fourth aspect, the computer program product is adapted for providing the functionality as described by one or more of the herein mentioned aspects or embodiments and/or for providing the functionality as required or as resulting by one or more of the herein mentioned aspects or embodiments, in particular of the embodiments of the first aspect.

According to a fifth aspect of the herein disclosed subject matter there is provided a method of identifying a rubber article according to the second aspect or an embodiment thereof, the method comprising: reading the digital code pattern from a polymer surface of the rubber article.

According to embodiments of the fifth aspect, the method is adapted for providing the functionality as described by one or more of the herein mentioned aspects or embodiments and/or for providing the functionality as required or as resulting by one or more of the herein mentioned aspects or embodiments, in particular of the embodiments of the first aspect.

According to a sixth aspect of the herein disclosed subject matter there is provided a computer program product, in particular in the form of a computer program or in the form of a computer readable medium comprising the computer program, for controlling the operation of a rubber article identification device, the computer program being configured for, when being executed on a data processor device, controlling the method according to the fifth aspect or an embodiment thereof.

According to embodiments of the fifth aspect, the method is adapted for providing the functionality as described by one or more of the herein mentioned aspects or embodiments and/or for providing the functionality as required or as resulting by one or more of the herein mentioned aspects or embodiments, in particular of the embodiments of the fifth aspect.

As used herein, reference to a computer program product is intended to be equivalent to a reference to a computer program and/or a computer readable medium containing a computer program for controlling a computer system to effect and/or coordinate the performance of any one of the above described methods.

The computer program may be implemented as computer readable instruction code by use of any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The herein disclosed subject matter may be realized by means of a computer program respectively software. However, the herein disclosed subject matter may also be realized by means of one or more specific electronic circuits respectively hardware. Furthermore, the herein disclosed subject matter may also be realized in a hybrid form, i.e. in a combination of software modules and hardware modules.

In the above there have been described and in the following there will be described exemplary embodiments of the subject matter disclosed herein with reference to a rubber article, a rubber article marking device and respective methods. It has to be pointed out that of course any combination of features relating to different aspects of the herein disclosed subject matter is also possible. In particular, some features have been or will be described with reference to apparatus type embodiments whereas other features have been or will be described with reference to method type embodiments. However, a person skilled in the art will gather from the above and the following description that, unless other notified, in addition to any combination of features belonging to one aspect also any combination of features relating to different aspects or embodiments, for example even combinations of features of the apparatus type embodiments and features of the method type embodiments are considered to be disclosed with this application.

The aspects and embodiments defined above and further aspects and embodiments of the herein disclosed subject matter are apparent from the examples to be described hereinafter and are explained with reference to the drawings, but to which the invention is not limited.

BRIEF DESCRIPTION OF THE DRAWINGS

Fig. 1 illustrates a method of providing a rubber article with a digital code pattern in a cured polymer material of the rubber article, according to embodiments of the herein disclosed subject matter.

Fig. 2 shows in a cross-sectional view part of a first surface portion and a second surface portion according to embodiments of the herein disclosed subject matter.

Fig. 3 shows an intensity pattern on a second surface portion according to embodiments of the herein disclosed subject matter.

Fig. 4 shows an intensity pattern on a second surface portion according to embodiments of the herein disclosed subject matter.

Fig. 5 illustrates a further process for generating a digital code pattern according to embodiments of the herein disclosed subject matter.

Fig. 6 shows a rubber article marking device according to embodiments of the herein disclosed subject matter.

Fig. 7 shows a further rubber article marking device according to embodiments of the herein disclosed subject matter.

Fig. 8 shows a device for identifying a rubber article and illustrates a method of identifying a rubber article according to embodiments of the herein disclosed subject matter.

DETAILED DESCRIPTION

The illustration in the drawings is schematic. It is noted that in different figures, similar or identical elements are provided with the same reference signs or with reference signs which are different from the corresponding reference signs only within the first digit. Accordingly, the description of similar or identical features is not repeated in the description of subsequent figures in order to avoid unnecessary repetitions. However, it should be understood that the description of these features in the preceding figures is also valid for the subsequent figures unless noted otherwise.

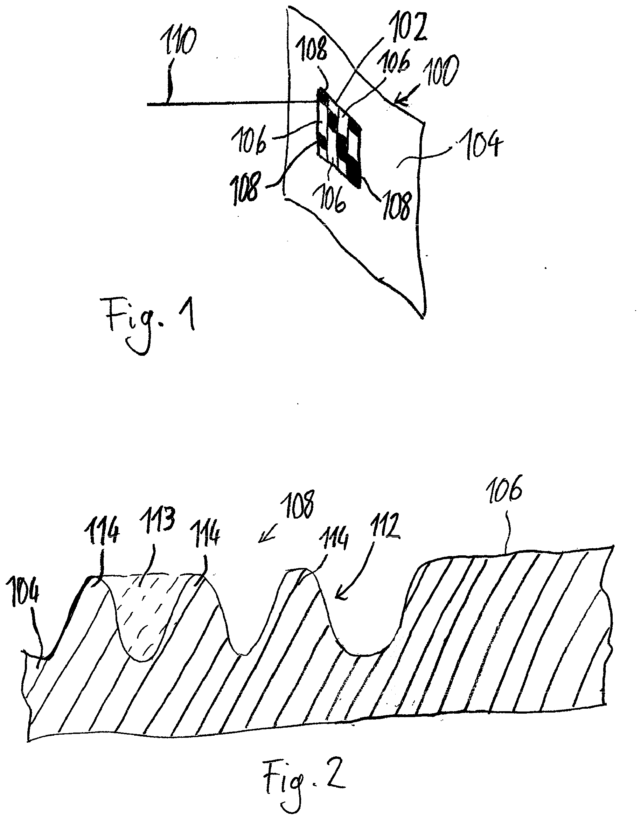

Fig. 1 illustrates a method of providing a rubber article 100 with a digital code pattern 102 in a cured polymer material of the rubber article 100, according to embodiments of the herein disclosed subject matter. According to an embodiment, the rubber optical 100 is a tire, only part of which is shown in Fig. 1. In accordance with an embodiment, the method comprises generating the digital code pattern 102 in the cured polymer material 104 of the rubber article 100, the digital code pattern 102 comprising a first surface portion 106 and a second surface portion 108 having different optical reflectivity (hereinafter also referred to as "reflectivity" for short). Since the digital code pattern is generated in the cured polymer material, the digital code pattern is a permanent pattern (in contrast to adhesive labels). According to an embodiment of, the digital code pattern 102 is an optically readable digital code pattern. Usually and in accordance with an embodiment, the digital code pattern 102 comprises a plurality of first surface portions 106 and a plurality of second surface portions 108, as shown in Fig. 1. According to an embodiment, the digital code pattern 102 is binary code pattern comprising two distinct reflectivities. However, it should be understood that that the digital code pattern may also be realized with more than two distinct reflectivities, e.g. three, four or more distinct reflectivities. According to an embodiment, the digital code pattern 102 is a bar code such as a linear (one-dimensional) bar code or a matrix (two-dimensional) bar code (e.g. a QR code). However, other digital code patterns are also possible.

In accordance with an embodiment, the term "optical reflectivity" includes a reflectivity for at least one of e.g. infrared radiation, visible light, ultraviolet radiation.

According to an embodiment, the digital code pattern 102 identifies the rubber article 100, in particular within a fabrication batch of rubber articles. According to other embodiments, a different identification may be provided by the digital code pattern 102, e.g. an identification within a weekly production (e.g. within tires having the same DOT code and/or tires manufactured in a specific curing mold (curing batch)), within a monthly production or within an annual production, etc. According to a further embodiment, the digital code pattern individually identifies each rubber product, e.g. within in a batch. According to a further embodiment, the digital code pattern identifies the rubber article as belonging to a subset of a batch (e.g. a curing batch). For example, according to an embodiment, the digital code pattern identifies the rubber article as belonging to a subset of a batch wherein the subset has been equipped with specific properties (such as an emergency operation property of a tire which causes small defects in the tire to be repaired automatically by a suitable inner layer in the tire).

Identification of the rubber article by the digital code pattern 102 is enabled by any process that generates the digital code pattern 102 individually in each individual rubber article 100.

According to an embodiment, generating the digital code pattern 102 may comprise reducing the surface area of the first surface portion (e.g. by flattening) and/or increasing the surface area of the second surface portion (e.g. by artificial roughening e.g. by generating a surface structure). According to an embodiment, generating the digital code pattern comprises irradiating the first surface portion and/or the second surface portion with an electromagnetic radiation 110, e.g. a laser beam as shown in Fig. 1. According to other embodiments, mechanical techniques are used to generate the digital code pattern in the cured polymer material 104.

Fig. 2 shows in a cross-sectional view part of a first surface portion 106 and a second surface portion 108 according to embodiments of the herein disclosed subject matter.

According to the invention, generating the digital code pattern 102 comprises generating a surface structure 112 in the second surface portion 108. According to an embodiment, the surface structure 112 increases the surface area of the second surface portion 108. In accordance with the invention, the surface structure 112 provides a second optical reflectivity which is lower than a first optical reflectivity of the first surface portion 106. According to an embodiment, generating the surface structure 112 comprises selectively removing a part of the cured polymer material 104. The removed part of the cured polymer material 104 is shown with dashed lines at 113 in Fig. 2. According to an embodiment, the selective removal of the part of the cured polymer is performed with electromagnetic radiation. According to a further embodiment, the electromagnetic radiation is a laser radiation, for example a pulsed laser radiation. The pulsed laser radiation may have a pulse length of less than 200 nanoseconds, e.g. less than 100 ns or less than 20 ns. However, it should be understood that the laser power and the pulse length may be adjusted to the particular application and in particular to the material from which the rubber article is formed.

According to an embodiment, the surface structure 112 comprises a plurality of protrusions 114, as shown in Fig. 2. In accordance with an embodiment, the first surface portion 106 is generally flat, without surface structure, as shown in Fig. 2. In this regard, it is noted that any real material and hence also the cured polymer material 104 has a certain surface roughness Ra. However, a surface structure as referred to herein has dimensions which are larger (according to an embodiment at least by a factor of two) than the mean surface roughness Ra of the rubber article. According to an embodiment, the mean surface roughness Ra of the cured polymer material is below 4 micrometers (Ra < 4 $\mu$m). According to a further embodiment, the mean surface roughness Ra of the cured polymer material is below 1 micrometer (Ra < 1 $\mu$m), or below 0.5 micrometers (Ra < 0.5 $\mu$m). According to an embodiment, generating the surface structure 112 does not result in a roughening of the surface and hence the cured polymer material which forms the surface structure 112 has a surface roughness Ra which is equal to or even lower than the surface roughness Ra of the cured polymer material 104 before generating the surface structure.

In accordance with an embodiment, the cured polymer material which forms the surface structure has a mean roughness Ra of 4 micrometers or less (Ra < 4 $\mu$m), e.g. 1 micrometer (Ra < 1 $\mu$m), or below 0.5 micrometers (Ra < 0.5 $\mu$m).

According to an embodiment, the surface structure 112 comprises a plurality of protrusions 114, as shown in Fig. 2. The protrusions 114 may be generated by selectively removing cured polymer material 104 in the vicinity of the region of the cured polymer where the protrusion is to be established.

According to an embodiment, the method of generating a digital code pattern comprises generating an (spatial) intensity pattern of varying intensity of the electromagnetic radiation on the second surface portion to perform the selective removal of cured polymer in high intensity regions of the intensity pattern.

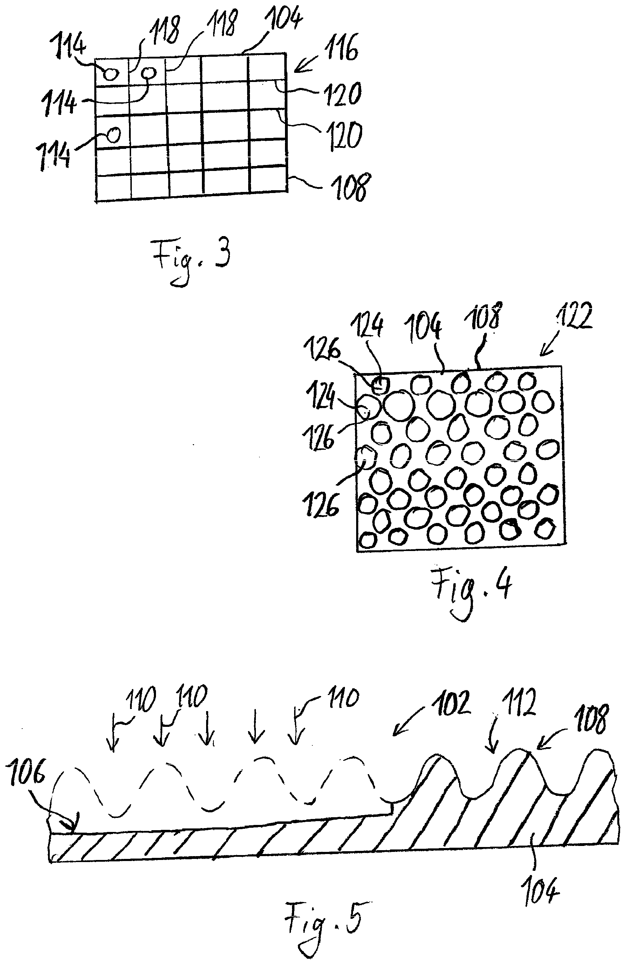

Fig. 3 shows an intensity pattern 116 on a second surface portion 108 according to embodiments of the herein disclosed subject matter. The intensity pattern 116 leads to a selective removal of cured polymer material in regions of high irradiation intensity, thereby generating a surface structure 112 according to embodiments of the herein disclosed subject matter.

According to an embodiment, the intensity pattern 116 shown in Fig. 3 is generated by moving an electromagnetic radiation beam along a path on the second surface portion 108. In this sense, the intensity pattern may be an accumulated intensity pattern which shows the intensity accumulated during generation of the surface structure 112. According to an embodiment, the path of the electromagnetic radiation beam corresponds to the desired intensity pattern 116.

According to another embodiment, the intensity pattern 116 is generated by any other suitable means, e.g. by a reticle which, when being illuminated with electromagnetic radiation, generates a projection of the intensity pattern 116 on the second surface portion 108. According to an embodiment, the reticle is illuminated with electromagnetic radiation and selectively allows the electromagnetic radiation to pass onto regions of the second surface portion 108 where cured polymer material 104 is to be removed. Further, the reticle blocks the electromagnetic radiation from passing onto regions of the second surface portion 108 in which cured polymer material shall not be removed.

According to another embodiment, the intensity pattern is generated by using a higher order mode of a laser which provides the electromagnetic radiation.

According to an embodiment, the intensity pattern 116 is generated by interference. For example, in an embodiment a diffraction grating is positioned in the radiation path of the electromagnetic radiation, resulting in diffraction of the incoming electromagnetic radiation beam wherein the diffracted beam produces the intensity pattern 116 on the second surface portion. Depending on the grating, the intensity pattern may be a line pattern, as shown in Fig. 3, or may be e.g. a point pattern.

According to an embodiment the intensity pattern 116 comprises a first set of parallel lines 118 and a second set of parallel lines 120 wherein a line 118 of the first set crosses at least one line 120 of the second set. The first set of lines and the second set of lines may define an angle of 90 degrees therebetween, as shown in Fig. 3, or, in another embodiment may define an angle different from 90 degrees therebetween. According to a further embodiment, the intensity pattern comprises three or more sets of parallel lines (not shown in Fig. 3) positioned at angles with respect to each other, e.g. for generating an intensity pattern that has hexagonal portions. According to a further embodiment, the intensity pattern comprises a single set of parallel lines. Selectively removing cured polymer material 104 along the lines 118, 120 generates a plurality of protrusions, some of which are schematically indicated at 114 in Fig. 3. Generally speaking, a protrusion 114 is generated by selectively removing cured polymer material 104 about the region, where the protrusion is to be generated.

According to an embodiment, the intensity pattern is generated by moving the electromagnetic radiation beam along the path only once. According to a further embodiment, the intensity pattern (e.g. the intensity pattern shown in Fig. 3) is generated by moving the electromagnetic radiation beam two times or more often along the path. According to a further embodiment, the contour of the second surface portions is traced at least once, e.g. 3 times. When using a pulsed laser, the pulse overlap of subsequent pulses may be in a range between 50 % and 90 %, e.g. between 70 and 80 %, e.g. 76 %. An exemplary $1/e^2$ beam diameter of the radiation beam may be between 130 and 180 micrometers, e.g. 150 micrometers. According to an embodiment, the distance between the parallel lines may be smaller than the $1/e^2$ beam diameter and may be between 70 and 150 micrometers, e.g. 100 micrometers for a 150 micrometer $1/e^2$ beam diameter. In connection with a Gaussian beam profile this may lead to rounded protrusions 114. The maximum depth in the surface structure may be between 70 micrometers and 500 micrometers, e.g. 100 micrometers. Exemplary laser parameters (Ytterbium pulsed fiber laser, central emission wavelength approx. 1064 nm) are a mean power of 20 Watts, a repetition rate of 20 kiloHerz (kHz) and a pulse duration of 100 nanoseconds.

According to a further embodiment, the surface structure 112 comprises a plurality of holes. In contrast to the generation of a protrusion, which includes selective removal of cured polymer material along one or more lines, a hole is formed by removal of cured polymer material at a point. Accordingly, in an embodiment the plurality of holes is generated by an intensity pattern having one or more individual spots.

Fig. 4 shows an (spatial) intensity pattern 122 on a second surface portion 108 according to embodiments of the herein disclosed subject matter. The intensity pattern 122 leads to a selective removal of cured polymer material in regions of high irradiation intensity, thereby generating a surface structure 112 according to embodiments of the herein disclosed subject matter.

In accordance with an embodiment, the intensity pattern 122 comprises a plurality of spots some of which are indicated at 124 in Fig. 4. Each spot 124 generates a hole 126 by selective removal of the cured polymer material 104 in the region of the spot 124.

According to other embodiments, other intensity patterns may be used to generate the surface structure in the second surface portions. Further, also other surface structures may be generated in the second surface portion in order to provide a second reflectivity which is lower than the first reflectivity of the first surface portion.

According to an embodiment, the entire intensity pattern on the second surface portion or, according to another embodiment, an all second surface portions of the digital code pattern, is generated at the same time (simultaneous exposure mode), e.g. by using a suitable reticle. According to another embodiment, the intensity pattern on a second surface portion is generated over a certain time period (scanning mode), e.g. by moving a beam of electromagnetic radiation over the second surface portion.

As already noted, any embodiments disclosed herein may be combined.

In particular, having regard to the subject matter disclosed herein, it should be mentioned that generally an (spatial) intensity pattern or the generation of an intensity pattern may be configured to include features of two or more embodiments as disclosed herein. For example, in accordance with an embodiment the intensity pattern is generated by moving an electromagnetic radiation beam along a path on the second surface portion, wherein the electromagnetic radiation beam itself has a structured intensity distribution which is e.g. generated by interference or a higher order mode of a laser beam. This may lead to an intensity pattern on the second surface which includes spatial intensity variations on different length scales.

Generally, the intensity pattern may include spatial intensity variations on different length scales. According to an embodiment, this may also be generated by a respective movement of an electromagnetic radiation beam or, advantageously by combining different embodiments of intensity pattern generation, e.g. by moving an electromagnetic radiation beam with structured intensity distribution over the second surface, as described above. Hence, in a more general embodiment, the surface structure comprises two or more sub structures of different length scale. In accordance with an embodiment, this may provide a low reflectivity as well as a good cleaning behavior of the second surface portion.

It should be understood that the combinations of embodiments described above may be used to generate an intensity pattern which on the longer length scale has lines (e.g. with a sub structure having lines and/or points) or, in another embodiment, may be used to generate an intensity pattern which on the longer length scale has points (e.g. with a sub structure having lines and/or points).

According to an embodiment, the ratio r which is defined as

$$r = d \: / \: x,$$

wherein

d is the $1/e^2$ beam width of the electromagnetic radiation and
x is the distance between the smallest structure elements of the surface structure,
is larger than 0.5 (r > 0.5).

Here the $1/e^2$ beam width is, as usual, defined as the distance between two points on the beam wherein they intensity is $1/e^2 = 0.135$ times the maximum intensity of the beam profile. Maintaining the beam width in the specified range is advantageous in particular in the scanning mode where an intensity pattern on the second surface portion is generated by moving the beam of electromagnetic radiation over the second surface portion in order to generate the surface structure.

According to an embodiment, the Rayleigh length of the electromagnetical radiation is larger than 1.5 millimeters, e.g. larger than 2 millimeters or larger than 4 millimeters. A large Rayleigh length which provides a large depth of focus may be advantageous for generating digital code patterns on curved surfaces, e.g. on tires.

According to an embodiment providing the first surface portion 106 includes manufacturing the cured polymer material 104 with a predetermined surface roughness Ra at least in a region which comprises the first surface portion 106; and maintaining the predetermined surface roughness Ra in the first surface portion 106 during generating the surface structure 112 in the second surface portion 108. In other words, according to an embodiment the first surface portion 106 may remain unchanged in the generation of the digital code pattern 102.

In addition to or, in another embodiment, alternatively to selectively providing the surface structure 112 in the second surface portions 108, the reflectivity of the first surface portions 106 may be adjusted. According to an embodiment, generating the digital code pattern 102 comprises flattening the first surface portions 106, the flattened first surface portions 106 providing a first optical reflectivity which is higher than a second optical reflectivity of the second surface portions 108. According to an embodiment, providing the first surface portion 106 includes reducing the surface roughness Ra in the first surface portion 106 of the cured polymer material 104 as manufactured.

Fig. 5 illustrates a further process for generating a digital code pattern 102 according to embodiments of the herein disclosed subject matter.

According to an embodiment the region, in which the digital code pattern 102 is to be established, is completely provided with a surface structure 112 as disclosed herein, i.e in the region of the first surface portion 106 (shown in dashed line in Fig. 5) as well as in the region of the second surface portion 108. Subsequently, the first surface portion 106 may be generated by flattening the surface structure 112 in the region of the first surface portion 106, e.g. by exposing the region of the first surface portion 106 to electromagnetic radiation 110. According to an embodiment, in the region of the second surface portion 108 the surface structure 112 is maintained, thereby resulting in the second surface portions 108 having lower optical reflectivity than the first surface portions 106.

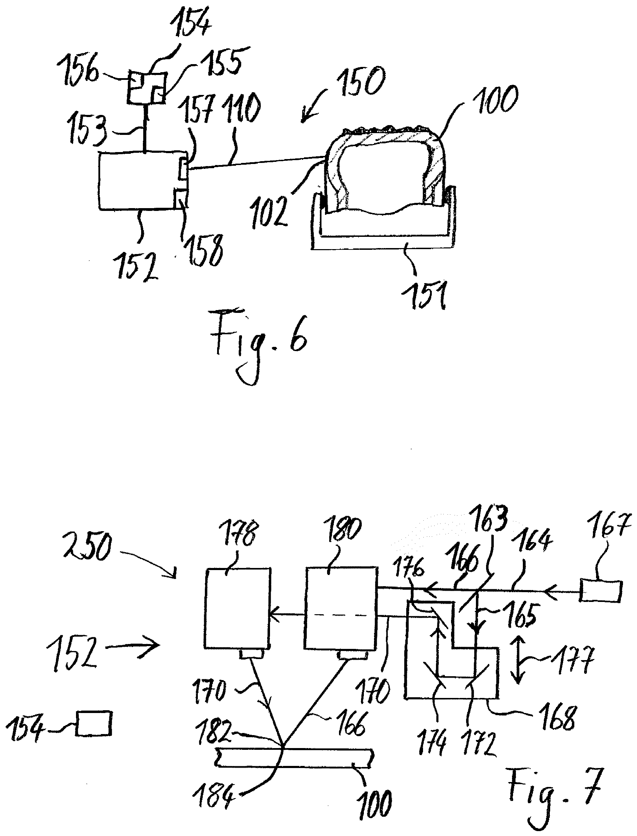

Fig. 6 shows a rubber article marking device according to embodiments of the herein disclosed subject matter.

The rubber article marking device 150 comprises a holder 151 for receiving a rubber article 100. Further, the rubber article marking device 150 comprises a radiation source 152 for providing electromagnetic radiation 110 and a controller 154 for controlling the radiation source 152 so as to perform a method of providing a rubber article with a digital code pattern 102 according one or more embodiments of the herein disclosed subject matter.

According to an embodiment, the rubber article marking device 150 comprises at least one actuator (e.g. a scan unit, not shown in Fig. 6) which is configured for moving the electromagnetic radiation beam 110 with respect to the rubber article 100 in the holder 151 so as to generate the digital code pattern 102 on the rubber article 100. According to an embodiment, the actuator is controlled by the controller 154. According to a further embodiment, the controller 154 is configured for controlling the operation of the radiation source, e.g. for switching on and off the electromagnetic radiation beam 110.

According to an embodiment, the controller 154 comprises a data processor device 155, e.g. computer, for executing computer program which is configured for, when executed on the data processor device 155, controlling the method according to one or more embodiments as disclosed herein. According to an embodiment, the computer program is included in a software update or a firmware update of the controller 154 so that existing tools can be updated so as to provide functionality according to embodiments of the herein disclosed subject matter. According to an embodiment, the controller 154 is configured for exchanging signals 153 with (e.g. providing control signals to) at least one entity to be controlled by the controller 154. Such entities may include e.g. the radiation source 152, conveyor devices (not shown in Fig. 6), etc.

According to an embodiment, the method of providing a rubber product with a digital code pattern comprises adjusting the focus position of the radiation source 152 which generates the electromagnetic radiation 110 during generating the digital code pattern 102. To this end, the light source 152 may comprise a focus position adjustment device 157. Adjusting the focus position during the generation of the code pattern may be advantageous e.g. if the digital code pattern is generated on a curved surface of the cured polymer material. Adjusting the focus position may further be advantageous if the radiation source is configured for moving the electromagnetic radiation beam 110 over the cured polymer material by pivoting the electromagnetic radiation beam, resulting in the electromagnetic radiation beam impinging inclined on the cured polymer material. The adjustment of the focus position may be performed according to a predefined control sequence which may be adapted to the particular rubber product and which may be stored in a memory 156 of the controller 154. According to another embodiment, there is provided a sensor 158 for determining a position of the rubber article 100, e.g. with respect to the focusing lens. According to an embodiment, the sensor includes a distance sensor for determining the position or the rubber article 100. According to an embodiment, the controller 154 is adapted for adjusting the focus position of the radiation source 152 in response to the position of the rubber article 100. Adjustment of the focus position may be performed e.g. by moving one or more lenses (e.g. of the focusing lens) of the radiation source or, according to another embodiment, by expanding the beam impinging on the focusing lens of the radiation source 152, just to name some examples.

Adjustment of the focus position may be performed so as to move the focus position onto the surface of the rubber article 100.

Fig. 7 shows part of a further rubber article marking device 250 according to embodiments of the herein disclosed subject matter.

The rubber article marking device 250 comprises a radiation source 152 which has a beam splitter 163 for splitting a primary radiation beam 164 into two secondary beams, a first secondary beam 165 and a second secondary beam 166. In accordance with an embodiment, the radiation source 152 includes a suitable source 167, e.g. a laser, for providing the primary radiation beam 164, as shown in Fig. 7. Further, according to an embodiment the radiation source 152 comprises a phase adjustment device 168 for changing the phase of the first secondary beam 165 with respect to the phase of the second secondary beam 166 and providing a phase-shifted first secondary beam 170. According to an embodiment, the phase adjustment device 168 comprises mirrors 172, 174, 176, of which at least some (e.g. two mirrors 172, 174) may be moveable (indicated at 177) in order to provide the phase adjustment device 168 with the capability to change the phase shift.

The radiation source 152 further comprises two scan units 178, 180 of which a first scan unit 178 is configured for projecting the phase shifted first secondary beam 170 onto the rubber article 100 in a first spot 182 and a second scan unit 180 is configured for projecting the second secondary beam 166 onto the rubber article 100 in a second spot 184 overlapping the first spot 182. According to an embodiment the two beams 166, 170 projected onto the article 100 overlap in time and space and therefore generate an interference pattern in the overlap of both spots 182, 184. According to an embodiment, the phase adjustment device 168 may be integrated into the respective scan unit 178. As described herein, the interference pattern may be used to selectively remove cured polymer material from the rubber article 100 in order to generate a digital code pattern. According to an embodiment, the controller 154 is configured for operating the scan units 178, 180 so as to provide a desired intensity pattern on a second surface portion by moving the overlapping spots 182, 184 together over the second surface portion. According to a further embodiment, where the radiation source 152 is configured for illuminating an entire (e.g. second) surface portion at a time, the controller 154 may be configured so as to move the overlapping spots 182, 184 together from one (second) surface portion 108 to another (second) surface portion 108. It is noted that the two overlapping beams 166, 170 together a form a "electromagnetic radiation 110" as referred to herein in other embodiments.

According to an embodiment, the rubber article marking device may comprise a reticle (not shown in Fig. 7) defining the size of the respective surface portion (first surface portion or second surface portion) to which electromagnetic radiation shall be applied. This may be advantageous in an embodiment where the intensity pattern (such as an interference pattern) is provided simultaneously over the entire area of the second surface portion or in an embodiment where the first surface portion is flattened with electromagnetic radiation. In such cases, the reticle provides sharply defined edges of the respective surface portion. According to an embodiment, the reticle is configured to provide the respective surface portion with a variable area, e.g. by movable parts which laterally define a passage which in turn defines the respective surface portion. Accordingly, the size of the respective surface portion is variable which may be necessary in some digital code patterns, e.g. in a QR code where the size of the first and second surface portions depends on the amount of information coded with the QR code.

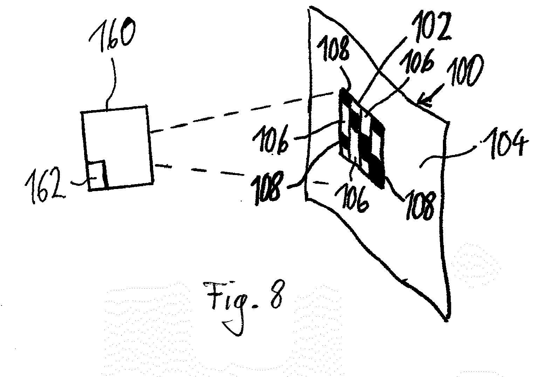

Fig. 8 shows a device for identifying a rubber article and illustrates a method of identifying a rubber article according to embodiments of the herein disclosed subject matter.

According to an embodiment, there is provided a device 160 for identifying a rubber article 100 (e.g. in the form of a tire) according to embodiments of the herein disclosed subject matter. According to an embodiment, the device 160 is configured for reading the digital code pattern 102 from a polymer 104 surface of the rubber article 100. For example, the device 160 may comprise a camera configured for acquiring a picture of the digital code pattern 102. According to an embodiment, the device 160 comprises a controller 162 which is configured for decoding the digital code pattern 102 and providing in response hereto a digital representation of the information stored in the digital code pattern 102. For example, the digital code pattern may be a graphical representation of identification information (e.g. a serial number) of the rubber article 100 which allows the device 160 to identify the rubber article 100 and hence allows the device 160 to provide specific information on the rubber article 100. According to an embodiment, the device 160 has access to a database which has stored therein the identification information represented by the digital code pattern and the specific information on the rubber article. This allows the device 160 to retrieve the specific information on the rubber article from the database upon extracting (decoding) the identification information from the acquired a digital code pattern.

The device 160 may be a stationary device e.g. in a tire manufacturing facility or may be e.g. portable device, e.g. a smart phone, which allows a user of the rubber article, e.g. a tire, to retrieve information on the rubber article in a familiar and pleasant way.

Identifying a rubber article such as a tire is advantageous in any application where identification tracking of a tire is helpful or even mandatory. Generating the digital code pattern in the cured polymer allows providing the rubber article with the digital code pattern independently from manufacturing of the rubber article and without requiring adhesive labels or the like.

Further, although some embodiments refer to a tire, etc., it should be understood that each of these references is considered to implicitly disclose a respective reference to the general term "rubber article" and vice versa. Also other terms which relate to specific terms (e.g. to a laser) are considered to implicitly disclose the respective general term with the specified functionality.

According to embodiments of the invention, any suitable entity (e.g. components, units and devices) disclosed herein, e.g. the controller, are at least in part provided in the form of respective computer programs which enable a processor device to provide the functionality of the respective entities as disclosed herein. According to other embodiments, any suitable entity disclosed herein may be provided in hardware. According to other - hybrid - embodiments, some entities may be provided in software while other entities are provided in hardware.

It should be noted that any entity disclosed herein (e.g. components, units and devices such as the controller, the radiation source, the scan unit, the phase shift unit, etc) are not limited to a dedicated entity as described in some embodiments. Rather, the herein disclosed subject matter may be implemented in various ways and with various granularity on device level or, where applicable, on software module level while still providing the specified functionality.

Further, it should be noted that according to embodiments a separate entity (part, portion, surface, component, unit, structure or device) may be provided for each of the functions disclosed herein. According to other embodiments, an entity (part, portion, surface, component, unit, structure or device) is configured for providing two or more functions as disclosed herein. According to still other embodiments, two or more entities (e.g. part, portion, surface, component, unit, structure or device) are configured for providing together a function as disclosed herein.

According to an embodiment, the controller comprises a processor device including at least one processor for carrying out at least one computer program corresponding to a respective software module.

It should be noted that the term "comprising" does not exclude other elements or steps and the "a" or "an" does not exclude a plurality. Hence, according to an embodiment the term "comprising" stands for "comprising inter alea". According to further embodiment, the term "comprising" stands for "consisting of". Also elements described in association with different embodiments may be combined. It should also be noted that reference signs in the claims should not be construed as limiting the scope of the claims. It should also be noted that reference signs in the description and the reference of the description to the drawings should not be construed as limiting the scope of the description. Rather, the drawings only illustrate an exemplary implementation of the described embodiments.

Further, it should be noted that while the examples in the drawings include a particular combination of several embodiments of the herein disclosed subject matter, any other combination of embodiment is also possible and is considered to be disclosed with this application.

In order to recapitulate some of the above described embodiments of the present invention one can state:

Described is a method of providing a rubber article with a digital code pattern, wherein the rubber article comprises a cured polymer material, the method comprising: Generating, e.g. by means of electromagnetic radiation, a digital code pattern in the cured polymer material of the rubber article, the digital code pattern comprising a first surface portion and a second surface portion having different optical reflectivity. Generating the digital code pattern may include generating protrusions or holes in the second surface portions. The digital code pattern may identify the rubber article e.g. within a batch of rubber articles.

List of reference signs:

100 rubber article
102 digital code pattern
104 polymer material
106 first surface portion
108 second surface portion
110 electromagnetic radiation
112 surface structure
114 protrusion
116 intensity pattern
118 first set of parallel lines
120 second set of parallel lines
122 intensity pattern
124 spot
126 hole
150 rubber article marking device
151 holder
152 radiation source
153 signal (e.g. control signal)
154 controller
155 data processor device
156 memory
157 focus position adjustment device
158 sensor
160 device for identifying a rubber article
162 controller of 160
163 beam splitter
165 first secondary beam
166 second secondary beam
167 source for a primary beam
168 phase adjustment device
170 phase shifted first secondary beam
172 mirror
174 mirror
176 mirror
177 movability of 172, 174
178 scan unit
180 scan unit
182 first spot
184 second spot
250 rubber article marking device

**Claims**

1. A method of providing a rubber article (100) with a digital code pattern (102), wherein the rubber article (100) comprises a cured polymer material (104), the method comprising:

   generating a digital code pattern (102) in the cured polymer material (104) of the rubber article (100), the digital code pattern (102) comprising a first surface portion (106) and a second surface portion (108); wherein the first surface portion (106) and the second surface portion (108) having different optical reflectivity; **characterized in that** the step of generating the digital code pattern (102) comprises generating a surface structure (112) in the second surface portion (108), the surface structure (112) providing a second optical reflectivity which is lower than a first optical reflectivity of the first surface portion (106).

2. A method according to claim 1, wherein the digital code pattern (102) identifies the rubber article (100), in particular within a fabrication batch of rubber articles.

3. The method according to claim 1 or 2, wherein the surface structure (112) comprises a plurality of holes (126).

4. The method according to any one of claims 1 to 3, wherein generating the surface structure (112) comprises selectively removing part of the cured polymer material (104).

5. The method according to claim 4, wherein the selective removal of the part of the cured polymer (104) is performed with electromagnetic radiation (110), in particular laser radiation, for example with pulsed laser radiation having a pulse length of less than 200 nanoseconds.

6. The method according to claim 5, further comprising generating an intensity pattern (116, 122) of varying intensity of the electromagnetic radiation (110) on the second surface portion (108) to perform the selective removal of cured polymer (104) in high intensity regions of the intensity pattern (116, 122).

7. The method according to claim 5 or 6, wherein

the ratio r = (1/e$^2$ beam width of the electromagnetic radiation (110)) / (distance between the smallest structure elements of the surface structure (112)) is larger than 0.5.

8. The method according to any one of claims 5 to 7, wherein the Rayleigh length of the electromagnetic radiation (110) is larger than 1.5 millimeters.

9. The method according to any one of claims 5 to 8 the method further comprising

adjusting the focus position of a radiation source (152) which provides the electromagnetic radiation (110) during generating the digital code pattern (102).

10. The method according to any one of the preceding claims wherein generating the digital code pattern (102) comprises flattening the first surface portions (106), the flattened first surface portions (106) providing a first optical reflectivity which is higher than a second optical reflectivity of the second surface portions (108).

11. A rubber article (100) comprising a cured polymer material (104) forming a surface of the rubber article (100), the surface comprising:

a first surface portion (106);
a second surface portion (108);
the first surface portion (106) and the second surface portion (108) forming at least a part of a digital code pattern (102);
wherein the digital code pattern (102) identifies the rubber article (100), in particular within a fabrication batch of rubber articles; wherein the first surface portion (106) having a first optical reflectivity;
the second surface portion (108) having a second optical reflectivity which is lower than the first optical reflectivity; **characterized by** a surface structure (112) in the second surface portion (108) is provided, the surface structure (112) providing a second optical reflectivity which is lower than a first optical reflectivity of the first surface portion (106).

12. Rubber article marking device (150, 250) comprising:

a radiation source (152) for providing electromagnetic radiation;
a controller (154) for controlling the radiation source (152) so as to perform the method according to any one of claims 1 to 10.

13. Computer program product, in particular in the form of a computer program or in the form of a computer readable medium comprising the computer program, for controlling the operation of a rubber article marking device, the computer program being configured for, when being executed on a data processor device (155), controlling the method according to any one of claims 1 to 10.

14. Method of identifying a rubber article (100) according to claim 11, the method comprising:

reading the digital code pattern (102) from a polymer surface of the rubber article (100).

**Patentansprüche**

1. Ein Verfahren des Ausstattens eines Gummiartikels (100) mit einem digitalen Codemuster (102), wobei der Gummiartikel (100) ein vulkanisiertes Polymermaterial (104) aufweist, das Verfahren aufweisend:

Erzeugen eines digitalen Codemusters (102) in dem vulkanisierten Polymermaterial (104) des Gummiartikels (100), wobei das digitale Codemuster (102) einen ersten Oberflächenteil (106) und einen zweiten Oberflächenteil (108) aufweist;
wobei
der erste Oberflächenteil (106) und der zweite Oberflächenteil (108) verschiedene optische Reflektivität aufweisen; **dadurch gekennzeichnet, dass** der Schritt des Erzeugens des digitalen Codemusters (102) ein Erzeugen einer Oberflächenstruktur (112) in dem zweiten Oberflächenteil (108) aufweist, wobei die Oberflächenstruktur (112) eine zweite optische Reflektivität liefert, die geringer ist als eine erste optische Reflektivität des ersten Oberflächenteils (106).

2. Verfahren gemäß Anspruch 1, wobei das digitale Codemuster (102) den Gummiartikel (100) identifiziert, insbesondere innerhalb eines Herstellungscharge von Gummiartikeln.

3. Verfahren nach Anspruch 1 oder 2, wobei die Oberflächenstruktur (112) eine Mehrzahl von Löchern (126) aufweist.

4. Verfahren gemäß irgendeinem der Ansprüche 1 bis 3, wobei das Erzeugen der Oberflächenstruktur (112) ein selektives Entfernen eines Teils des vulkanisierten Polymermaterials (104) aufweist.

5. Verfahren gemäß Anspruch 4, wobei das selektive Entfernen des Teils des vulkanisierten Polymers (104) mit elektromagnetischer Strahlung (110) ausgeführt wird, insbesondere Laserstrahlung, zum Beispiel gepulster Laserstrahlung, welche eine Pulslänge von weniger als 200 Nanosekunden aufweist.

6. Verfahren nach Anspruch 5, ferner aufweisend Erzeugen eines Intensitätsmusters (116, 122) von variierender Intensität der elektromagnetischen Strahlung (110) auf dem zweiten Oberflächenteil (108) zum Durchführen des selektiven Entfernens von vulkanisiertem Polymer (104) in Hochintensitätsgebieten des Intensitätsmusters (116, 122).

7. Verfahren gemäß Anspruch 5 oder 6, wobei

das Verhältnis r = (1/e$^2$-Strahlbreite der elektromagnetischen Strahlung (110)) / (Abstand zwischen den kleinsten Strukturelementen der Oberflächenstruktur (112)) größer ist als 0,5.

8. Verfahren gemäß irgendeinem der Ansprüche 5 bis 7, wobei die Rayleigh-Länge der elektromagnetischen Strahlung (110) größer als 1,5 Millimeter ist.

9. Verfahren gemäß irgendeinem der Ansprüche 5 bis 8, das Verfahren ferner aufweisend

Einstellen der Fokusposition einer Strahlungsquelle (152), welche die elektromagnetische Strahlung (110) liefert, während des Erzeugens des digitalen Codemusters (102).

10. Verfahren gemäß irgendeinem der vorhergehenden Ansprüche, wobei das Erzeugen des digitalen Codemusters (102) ein Glätten der ersten Oberflächenteile (106) aufweist, wobei die geglätteten ersten Oberflächenteile (106) eine erste optische Reflektivität liefern, die höher ist als eine zweite optische Reflektivität der zweiten Oberflächenteile (108).

11. Gummiartikel (100) aufweisend ein vulkanisiertes Polymermaterial (104), welches eine Oberfläche des Gummiartikels (100) bildet, die Oberfläche aufweisend:

einen ersten Oberflächenteil (106);
einen zweiten Oberflächenteil (108);
wobei der erste Oberflächenteil (106) und der zweite Oberflächenteil (108) mindestens einen Teil eines digitalen Codemusters (102) bilden;
wobei das digitale Codemuster (102) den Gummiartikel (100) identifiziert, insbesondere innerhalb einer Herstellungscharge von Gummiartikeln;
wobei
der erste Oberflächenteil (106) eine erste optische Reflektivität aufweist;
der zweite Oberflächenteil (108) eine zweite optische Reflektivität aufweist, die geringer ist als die erste optische Reflektivität;
**gekennzeichnet durch**
eine Oberflächenstruktur (112) in dem zweiten Oberflächenteil (108) bereitgestellt ist, wobei die Oberflächenstruktur (112) eine zweite optische Reflektivität liefert, die geringer ist als eine erste optische Reflektivität des ersten Oberflächenteils (106).

12. Gummiartikelmarkierungsvorrichtung (150, 250) aufweisend:

eine Strahlungsquelle (152) zum Liefern von elektromagnetischer Strahlung;
eine Steuerung (154) zum Steuern der Strahlungsquelle (152), um so das Verfahren gemäß irgendeinem der Ansprüche 1 bis 10 durchzuführen.

**13.** Computerprogrammprodukt, insbesondere in der Form eines Computerprogramms oder in der Form eines computerlesbaren Mediums, welches das Computerprogramm enthält, zum Steuern des Betriebes einer Gummiartikelmarkierungsvorrichtung, wobei das Computerprogramm eingerichtet ist, um, wenn es auf einer Datenprozessorvorrichtung (155) ausgeführt wird, das Verfahren gemäß irgendeinem der Ansprüche 1 bis 10 zu steuern.

**14.** Verfahren des Identifizierens eines Gummiartikels (100) gemäß Anspruch 11, das Verfahren aufweisend:

Lesen des digitalen Codemusters (102) von einer Polymeroberfläche des Gummiartikels (100).

**Revendications**

**1.** Procédé pour doter un article en caoutchouc (100) d'un motif de code numérique (102), dans lequel l'article en caoutchouc (100) comprend un matériau polymère durci (104), le procédé comprenant :

la génération d'un motif de code numérique (102) dans le matériau polymère durci (104) de l'article en caoutchouc (100), le motif de code numérique (102) comprenant une première partie de surface (106) et une seconde partie de surface (108) ;
dans lequel
la première partie de surface (106) et la seconde partie de surface (108) ont une réflectivité optique différente ;
**caractérisé en ce que** l'étape consistant à générer le motif de code numérique (102) comprend la génération d'une structure de surface (112) dans la seconde partie de surface (108), la structure de surface (112) fournissant une seconde réflectivité optique qui est inférieure à une première réflectivité optique de la première partie de surface (106).

**2.** Procédé selon la revendication 1, dans lequel le motif de code numérique (102) identifie l'article en caoutchouc (100), en particulier à l'intérieur d'un lot de fabrication d'articles en caoutchouc.

**3.** Procédé selon la revendication 1 ou 2, dans lequel la structure de surface (112) comprend une pluralité de trous (126).

**4.** Procédé selon l'une quelconque des revendications 1 à 3, dans lequel la génération de la structure de surface (112) comprend le retrait sélectif d'une partie du matériau polymère durci (104).

**5.** Procédé selon la revendication 4, dans lequel le retrait sélectif de la partie du polymère durci (104) est réalisé par rayonnement électromagnétique (110), en particulier rayonnement laser, par exemple par rayonnement laser pulsé ayant une longueur d'impulsion inférieure à 200 nanosecondes.

**6.** Procédé selon la revendication 5, comprenant en outre la génération d'un motif d'intensité (116, 122) d'intensité variable du rayonnement électromagnétique (110) sur la seconde partie de surface (108) pour réaliser le retrait sélectif du polymère durci (104) dans des régions d'intensité élevée du motif d'intensité (116, 122).

**7.** Procédé selon la revendication 5 ou 6, dans lequel le rapport r = (1/e$^2$ de largeur de faisceau du rayonnement électromagnétique (110)) / (distance entre les plus petits éléments de structure de la structure de surface (112)) est supérieur à 0,5.

**8.** Procédé selon l'une quelconque des revendications 5 à 7, dans lequel la longueur de Rayleigh du rayonnement électromagnétique (110) est supérieure à 1,5 millimètre.

**9.** Procédé selon l'une quelconque des revendications 5 à 8, le procédé comprenant en outre le réglage de la position de focalisation d'une source de rayonnement (152) qui fournit le rayonnement électromagnétique (110) pendant la génération du motif de code numérique (102).

**10.** Procédé selon l'une quelconque des revendications précédentes dans lequel la génération du motif de code numérique (102) comprend l'aplatissement des premières parties de surface (106), les premières parties de surface (106) aplaties fournissant une première réflectivité optique qui est supérieure à une seconde réflectivité optique des secondes parties de surface (108).

**11.** Article en caoutchouc (100) comprenant un matériau polymère durci (104) formant une surface de l'article en caoutchouc (100), la surface comprenant :

une première partie de surface (106) ;
une seconde partie de surface (108) ;
la première partie de surface (106) et la seconde partie de surface (108) formant au moins une partie d'un motif de code numérique (102) ;
dans lequel lé motif de code numérique (102) identifie l'article en caoutchouc (100), en particulier à l'intérieur d'un lot de fabrication d'articles en caoutchouc ;
dans lequel la première partie de surface (106) a une première réflectivité optique ;
la seconde partie de surface (108) a une seconde réflectivité optique qui est inférieure à la première réflectivité optique ;

**caractérisé en ce qu'**une structure de surface (112) dans la seconde partie de surface (108) est fournie, la structure de surface (112) fournissant une seconde réflectivité optique qui est inférieure à une première réflectivité optique de la première partie de surface (106).

12. Dispositif de marquage d'article en caoutchouc (150, 250) comprenant :

une source de rayonnement (152) pour fournir un rayonnement électromagnétique ;
un dispositif de commande (154) pour commander la source de rayonnement (152) de façon à mettre en oeuvre le procédé selon l'une quelconque des revendications 1 à 10.

13. Produit de programme informatique, en particulier sous la forme d'un programme informatique ou sous la forme d'un support lisible par ordinateur comprenant le programme informatique, pour commander le fonctionnement d'un dispositif de marquage d'article en caoutchouc, le programme informatique étant configuré pour, lorsqu'il est exécuté sur un dispositif de traitement de données (155), commander le procédé selon l'une quelconque des revendications 1 à 10.

14. Procédé pour identifier un article en caoutchouc (100) selon la revendication 11, le procédé comprenant :

la lecture du motif de code numérique (102) à partir d'une surface polymère de l'article en caoutchouc (100).

Fig. 1

Fig. 2

Fig. 3

Fig. 4

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1063071 A2
- US 20090218019 A1
- US 20120227879 A1
- WO 2005000714 A1
- EP 1437672 A2
- JP 2004345310 A
- JP 2000084681 A
- US 6149060 A
- EP 0689948 A2
- US 6169266 B1